# EUROPEAN PATENT SPECIFICATION

(11) **EP 3 855 402 B1**
(45) Date of publication and mention of the grant of the patent: **04.12.2024**
(21) Application number: 19882068.0
(22) Date of filing: 02.08.2019
(51) Int. Cl.: A47F 10/02, G07C 1/00, G06Q 20/18, G07G 1/00, G07F 11/06, G07F 11/26, G06Q 10/08, G06Q 20/10, G06Q 20/20, G07F 17/40, G06Q 10/083, G06Q 10/087

(54) **RETAIL FACILITY AND COMMODITY PROCESSING METHOD THEREFOR**
EINZELHANDELSEINRICHTUNG UND WARENVERARBEITUNGSVERFAHREN DAFÜR
INSTALLATION DE VENTE AU DÉTAIL ET SON PROCÉDÉ DE TRAITEMENT DE MARCHANDISES

(30) Priority: 06.11.2018 CN 201811309715
(43) Date of publication of application: 28.07.2021
(73) Proprietor: Beijing Jingdong Zhenshi Information Technology Co., Ltd., Beijing, Beijing 100086 (CN)
(72) Inventor: LI, Yaman, Beijing 100086 (CN); HUO, Hong, Beijing 100086 (CN)
(74) Representative: Prüfer & Partner mbB Patentanwälte · Rechtsanwälte
(86) International application number: PCT/CN2019/099057
(87) International publication number: WO 2020/093743

(56) References cited:
- CN-A- 101 468 722
- CN-A- 102 622 812
- CN-A- 105 704 248
- CN-A- 105 915 651
- CN-A- 106 887 081
- CN-A- 107 610 334
- CN-A- 107 679 956
- CN-A- 108 010 227
- CN-A- 108 053 280
- CN-A- 108 460 882
- CN-A- 109 345 709
- CN-U- 203 720 933
- GB-A- 2 486 069
- US-A1- 2011 295 704

## Description

### TECHNICAL FIELD

The present disclosure relates to the field of retail, and in particular to a retail facility and a merchandise processing method thereof.

### BACKGROUND

With the increasing labor cost and the technological progress, an unmanned retail has gradually emerged as a hot spot. The unmanned retail refers to an unattended service that mainly provides retail consumer services under unmanned conditions. "Unmanned" here generally represents that there are no salesman and cashier to provide manual services.

Currently, unmanned supermarkets have been built and operated in multiple cities in China. In the unmanned supermarket model known to the inventors, there are mainly two technologies to realize unmanned shopping: one is to realize unmanned shopping by RFID, and the other is to realize unmanned shopping by image recognition.

CN patent application publication No. CN107679956A discloses a supermarket self-service check-out and commodity pickup system and method. The system includes a commodity transfer device, a user terminal, a business operation center platform, a basket filling system, and a self - service commodity pickup device; the user terminal and the basket filling system both communicate with the business operation center platform; the basket filling system establishes a connection with the self-service commodity pickup device; a user performs code scanning on selected commodities through the user terminal; the scanned commodities are automatically transferred to the basket filling system through the commodity transfer device; the basket filling system distributes corresponding vacant baskets according to orders; the business operation center platform returns a self-service commodity pickup verification code after the user performs check out; and self-service commodity pickup can be realized through the self-service commodity pickup device. With the supermarket self-service check-out and commodity pickup system and method of the invention adopted, the space utilization rate of supermarkets can be effectively improved; self-service supermarket shopping experience can be greatly realized; and waiting time required by the shopping and queuing of users can be effectively reduced

Likewise, GB Patent No. GB2486069A discloses a product provisioning system, such as a vending machine, is arranged, in use, to deliver to a user substantially simultaneously a plurality of discrete products. The product provisioning system comprises a plurality of independently-controllable product dispensing mechanisms each configured to dispense different types of products from one another. The product provisioning system also comprises a product collector arranged to collect together products dispensed by the plurality of product dispensing mechanisms. A control system is in communication with the product dispensing mechanisms, and is arranged to receive a user-specified product order for multiple products and, in response, control a set of the plurality of product dispensing mechanisms in parallel to dispense the required products. The product dispensing mechanism may comprise a vertical channel with a restriction mechanism to control the passage of products. Product channels may be aligned with one another and have a restocking inlet. The product collector may have an inclined, cushioned, friction-reducing, surface, such as a net with attached rollers or beads. A user may be authenticated through a card reader before goods are dispensed. The dispensing of more than one product at the same time reduces waiting times at the product provisioning system.

CN patent application publication No. CN108053280A discloses an intelligent shopping system allowing reservation and self-service discharge and an application method of the system. The system comprises a closed warehouse, a control system and a client, wherein the closed warehouse is provided with a satellite positioning device; the satellite positioning device comprises a car body, multi-level classified storage units and multi - level conveying pipelines, wherein the car body is provided with discharge ports, to-be-sold commodities are contained in the corresponding storage units according to classification, the first end of each multi-level conveying pipeline is communicated with the corresponding discharge port, the second end of each multi-level conveying pipeline is branched level by level, and the branches of all levels are communicated with the storage units of the corresponding levels to form a netlike multi-level conveying system with the level-by-level branches corresponding to the storage units of all levels; the control system comprises an order reading device and a controller; and the client receives position information of the closed warehouse, a reservation APP is installed on the client, commodity types and states are viewed and reservation are performed through the reservation APP, orders are sent to the order reading device for translation, and the order reading device starts the controller for discharge.

### SUMMARY

According to one aspect of the present disclosure, a retail facility is provided. The retail facility includes: a building, including a merchandise display area configured to place a merchandise, a packaging area, configured to package a merchandise, and a shipment area, configured to output a packaged merchandise; a sorting device, configured to sort the merchandise from the merchandise display area to the packaging area; a packaging device configured to package the merchandise entering the packaging area; and a conveying device configured to convey the packaged merchandise from the packaging area to the shipment area;
wherein the merchandise display area includes a plurality of merchandise shelves, each merchandise shelf of which is configured to place at least one category of merchandises, and each merchandise shelf of which is provided with scan information corresponding to categories of merchandises placed on the merchandise shelf;
wherein the packaging area includes a plurality of packaging ports, and the sorting device includes: a plurality of sliding ports respectively provided below the plurality of merchandise shelves, wherein each sliding port is openable and closable; and a conveying path communicating with the plurality of sliding ports and the plurality of packaging ports, and configured to convey the merchandise sliding off from the sliding ports to a corresponding packaging port; and wherein the packaging device comprises: a closing mechanism configured to close a wrappage provided at the packaging port; and the conveying path comprises a slideway, below which the plurality of packaging ports are located, and the sorting device further comprises a flip provided at each packaging port, such that the flip is configured to allow the merchandise to fall into the corresponding packaging port from the slideway when the flip is opened.

In some embodiments, the building further includes: an area for providing a scanning device configured to provide a scanning device with a designated identification, wherein the scanning device is configured to scan the scan information on the merchandise shelf so as to form a merchandise order and associate the scan information with the designated identification; and optionally, the scanning device comprises a scanner wearable on a human body or a hand-holdable scanner.

In some embodiments, the retail facility further includes: a charging device configured to provide a payment interface and provide a payment completion information after a payment is completed; the building further includes : an area for returning a scanning device configured to receive a returned scanning device and trigger the charging device to display the payment interface of the merchandise order.

In some embodiments, the scanning device includes a scanner wearable on a human body or a hand-holdable scanner.

In some embodiments, the conveying device includes a horizontal conveying mechanism and a vertical conveying mechanism, wherein the horizontal conveying mechanism is located below the packaging area to convey the packaged merchandise falling off from the packaging port to the vertical conveying mechanism, and the vertical conveying mechanism is configured to lift the packaged merchandise to the shipment area.

In some embodiments, the merchandise display area, the conveying path, the packaging area and the horizontal conveying mechanism are distributed sequentially from top to bottom in layers of different heights.

In some embodiments, a transparent casing is provided outside the merchandise display area, the conveying path, the packaging area and the shipment area.

In some embodiments, the packaging device includes: a closing mechanism configured to close a wrappage provided at the packaging port.

According to one aspect of the present disclosure, a merchandise processing method based on the foregoing retail facility is provided. The method includes: when a merchandise order associated with a scanning device is received, controlling the sorting device according to the merchandise order to sort a corresponding merchandise within the merchandise display area to positions corresponding to the scanning device within the packaging area; when a payment completion information is received, controlling the packaging device to package the merchandise at corresponding positions within the packaging area, and controlling the conveying device to convey a packaged merchandise to the shipment area.

In some embodiments, the step of receiving a merchandise order includes: receiving a merchandise order sent by the scanning device or a merchandise shelf when the scanning device scans the scan information of the merchandise shelf, wherein the merchandise order includes associated information between the scanning device and the merchandise of a designated merchandise category and quantity.

In some embodiments, the step of sorting includes: opening a sliding port where a merchandise of a designated merchandise category is situated so that the merchandise slides off from the sliding port to the conveying path; when the merchandise is conveyed within the conveying path to a packaging port corresponding to the scanning device, opening the packaging port so that the merchandise falls into the packaging port.

In some embodiments, the merchandise processing method further includes the steps before a packaging step: display a payment interface corresponding to the merchandise order by the charging device; receiving a payment completion information issued by the charging device after a payment is completed.

In some embodiments, the merchandise processing method further includes a method for processing an unpaid merchandise order, which includes: causing a position within the packaging area corresponding to the merchandise order to be inoperable.

In some embodiments, the method for processing an unpaid merchandise order further includes: when a re-shelving instruction is received, causing the position within the packaging area corresponding to the merchandise order to be operable and conveying an unpackaged merchandise to the shipment area for re-shelving by the conveying device.

### BRIEF DESCRIPTION OF THE DRAWINGS

The accompanying drawings, which constitute part of this specification, illustrate exemplary embodiments of the present disclosure and, together with this specification, serve to explain the principles of the present disclosure.

The present disclosure may be more clearly understood from the following detailed description with reference to the accompanying drawings, in which:
Fig. 1 is a block diagram of some embodiments of the retail facility according to the present disclosure;
Fig. 2 is a schematic structural view of some embodiments of the retail facility according to the present disclosure in a top-view angle;
Fig. 3 is a schematic structural view of some embodiments of the retail facility according to the present disclosure in a perspective angle;
Fig. 4 is a schematic flowchart of some embodiments of the merchandise processing method of a retail facility according to the present disclosure;
Fig. 5 is a schematic diagram of a sorting process in some embodiments of the merchandise processing method of a retail facility according to the present disclosure;
Fig. 6 is a schematic diagram of a payment flow in some embodiments of the merchandise processing method of a retail facility according to the present disclosure;
Fig. 7 is a schematic diagram of a processing flow of unpaid merchandise orders in some embodiments of the merchandise processing method of a retail facility according to the present disclosure.

It should be understood that the dimensions of the various parts shown in the accompanying drawings are not drawn according to the actual scale. In addition, the same or similar reference signs are used to denote the same or similar components.

### DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noted that, unless otherwise specified, the relative arrangements of the components and steps expounded in these embodiments should be construed as merely illustrative, rather than as a delimitation.

The use of the terms "first", "second" and similar words in the present disclosure do not denote any order, quantity or importance, but are merely used to distinguish between different parts. A word such as "comprise", "include" or variants thereof means that the element before the word covers the element (s) listed after the word without excluding the possibility of also covering other elements. The terms "up", "down", "left", "right", or the like are used only to represent a relative positional relationship, and the relative positional relationship may be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries , unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

In the unmanned supermarket model known to the inventors, there are mainly two technologies to realize unmanned shopping: one technology is to realize unmanned shopping by RFID, and the other is to realize unmanned shopping by image recognition. After studies, it has been found that in a RFID solution, there is a need to adhere a RFID tag before each merchandise is sold. Considering the labor occupied for adhering RFID and the price of a RFID tag, it is apparent that such solution requires consumption of much labor and cost. In the image recognition solution, there is a problem of low recognition accuracy, which results in misidentifying merchandise. Moreover, the number of consumers allowed by this solution to enter the supermarket at the same time cannot exceed a certain number (for example, 10 to 20 consumers), which renders a poor shopping experience.

In view of this, the embodiments of the present disclosure provide a retail facility and a merchandise processing method thereof , which can save labor and cost.

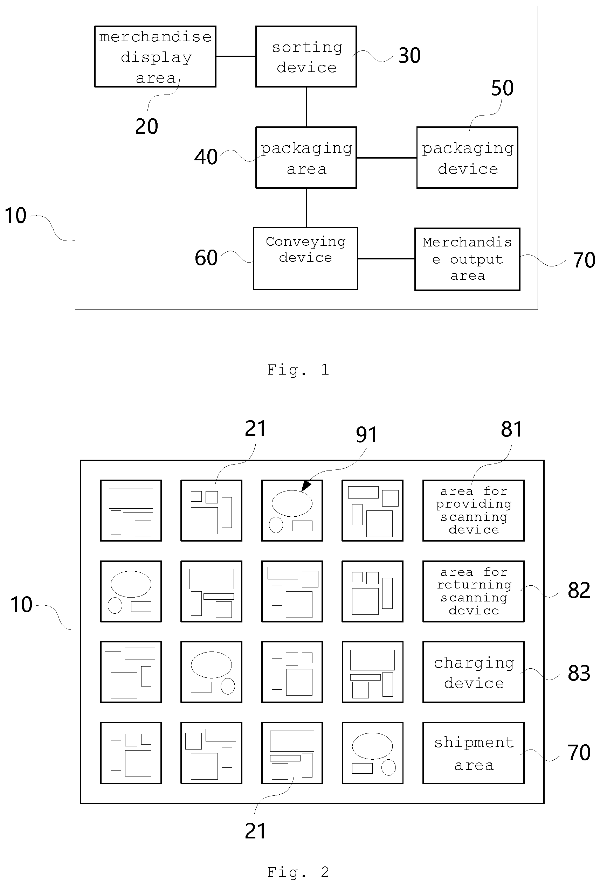

As shown in Fig. 1, it is a block diagram of some embodiments of the retail facility according to the present disclosure. Referring to Fig. 1, according to the present invention, the retail facility includes: a building 10, a sorting device 30, a packaging device 50 and a conveying device 60. The building 10 may be a stationary or mobile building built on the ground or other bearing surfaces (for example, a surface of a vehicle or a ship or the like). The building 10 may also be a single-layer structure, or may include a multi-layer structure.

The building 10 includes a merchandise display area 20, a packaging area 40 and a shipment area 70. The merchandise display area 20 is configured to place merchandise 91 so that the user may view and select merchandise. The packaging area 40 is configured to package the merchandise 91. The sorting device 30 is configured to sort the merchandise 91 from the merchandise display area 20 to the packaging area 40. The packaging device 50 is configured to package the merchandise 91 entering the packaging area 40.

The shipment area 70 is configured to output the packaged merchandise 92 so that the user may be provided with the packaged merchandise 92. The conveying device 60 is configured to convey the packaged merchandise 92 from the packaging area 40 to the shipment area 70.

In this embodiment, the user may select the merchandise desired to be obtained according to own needs when browsing the merchandise placed within the merchandise display area 20. The retail facility can automatically sort, package and output the merchandise selected by the user without scanning a RFID tag in the whole process, thereby saving the cost of a RFID tag and the labor occupied for adhering a RFID tag.

As shown in Fig. 2, it is a schematic structural view of some embodiments of the retail facility according to the present disclosure in a top-view angle. Referring to Fig. 2, according to the present invention, the merchandise display area 20 includes a plurality of merchandise shelves 21. These merchandise shelves 21 may be arranged at the same height, or at different heights. Passages for pedestrians may be formed between each merchandise shelf 21, so that a user may freely browse the merchandise on each merchandise shelf 21.

Each merchandise shelf 21 is configured to place at least one category of merchandises 91, and each merchandise shelf 21 is provided with scan information corresponding to a category of the merchandise placed on the merchandise shelf 21 (e.g., a barcode or a QR code, and the like). When a user selects a merchandise on the merchandise shelf 21, a merchandise order may be formed by scanning the scan information on the merchandise shelf 21.

The user may use a scanning device provided by the retail facility to scan the scan information. Correspondingly, the building 10 may further include an area 81 for providing a scanning device, configured to provide a scanning device with a designated identification. The scanning device may scan the scan information on the merchandise shelf 21 so that the controller or remote control platform of the retail facility may form a merchandise order, and associate the scan information with a designated identification. Since the scanning device corresponds to a designated identification, when the user scans by the scanning device, it is possible to establish a correlation between the scanning device and the scanned merchandise, and also establish a corresponding relationship with this merchandise order of the user.

After the user finishes selection, the scanning device may be returned to the retail facility, that is, the building 10 also includes an area 82 for returning a scanning device. The return of the scanning device may also be associated with a payment flow of the user, that is, the retail facility includes a charging device 83. The charging device 83 may display a payment interface, for example, displaying the price information of each merchandise selected by the user, the total price after accumulation, and the like. When the area 82 for returning the scanning device receives the returned scanning device, the charging device 83 may be triggered to display a payment interface of the merchandise order.

In some embodiments, the scanning device may include a scanner wearable on a human body or a hand-holdable scanner, for example a ring, a wristband, glasses, a helmet, or a handheld scanner. After obtaining the scanning device, the user may return the scanning device to trigger a payment operation, so that the scanning device may be recycled in use, thereby reducing the cost. In other embodiments, the scanning device may also include a mobile communication device brought by the user, for example a cell phone. The user may scan by a built-in system program or a downloaded application program of the cell phone.

The user may select a payment method according to the prompts of the payment interface, for example, by cash, bank card, shopping card, Internet payment method, or the like, to perform a payment operation. After a payment is completed, the charging device 83 may deliver a payment completion information to the controller or remote control platform of the retail facility, so that the controller or remote control platform may control the packaging device 50 to perform a packaging operation, and control the conveying device 60 to convey the packaged merchandise 92 to the shipment area 70.

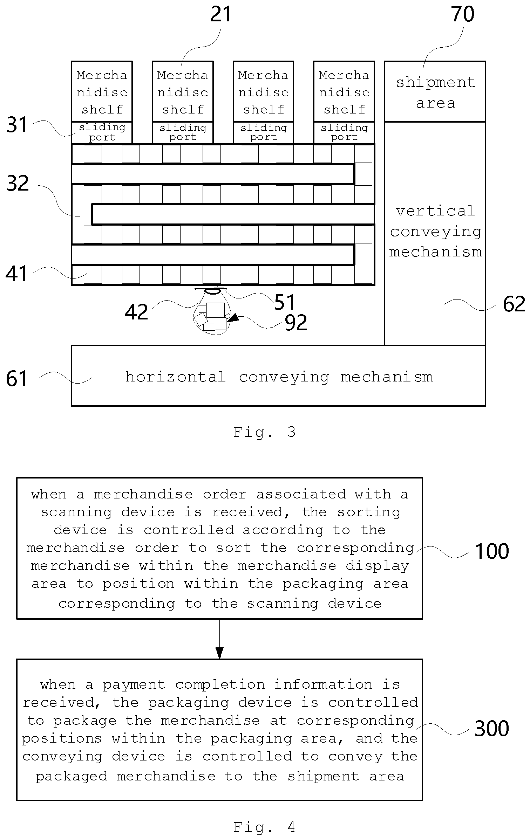

As shown in Fig. 3, it is a schematic structural view of some embodiments of the retail facility according to the present disclosure in a perspective angle. Referring to Fig. 3, according to the present invention, the sorting device 30 includes a plurality of openable and closable sliding ports 31 and a conveying path 32. The plurality of openable and closable sliding ports 31 are respectively arranged below the plurality of merchandise shelves 21. The conveying path 32 communicates with the plurality of sliding ports 31, so as to move the merchandise 91 sliding off from the sliding ports 31 along the conveying path 32.

When a user uses the scanning device to scan a merchandise 91 on a certain merchandise shelf 21, the controller or remote control platform of the retail facility generates a new merchandise order or adds the scanned merchandise to the existing merchandise order. Moreover, the controller or a remote control platform may control the sliding port 31 below the merchandise shelf 21 to open, so that the selected merchandise slides from the sliding port 31 to the conveying path 32 under the action of gravity.

In Fig. 3, the packaging area 40 includes a plurality of packaging ports 41. The conveying path 32 communicates with the plurality of packaging ports 41, and is configured to convey the merchandise 91 sliding off from the sliding ports 31 to the corresponding packaging ports 41. According to the present invention , the conveying path 32 includes a slideway, below which the plurality of packaging ports 41 are located. The sorting device 30 further includes a flip provided at the packaging port 41. When the flip is opened, the merchandise 91 is allowed to fall into the packaging port 41 from the slideway. In this way, when the merchandise slides along the slideway, the merchandise 91 slides to the packaging port with the opened flip so as to fall into the packaging port 41. In other examples not falling within the scope of the invention as claimed, the conveying path 32 may include a belt conveying device, a chain conveying device, a roller conveying device, or the like.

Referring to Fig. 3, a wrappage 42 for containing the merchandise 91 may be provided below the packaging port 41. The wrappage 42 may be a plastic bag, a paper bag, a cloth bag, a carton, or the like. After the merchandise 91 falls into the wrappage 42, tying may be suspended temporarily, and when checkout is completed, the packaging device 50 may complete the packaging of the merchandise to form the packaged merchandise 92. The packaging device 50 includes a closing mechanism 51 for tying the wrappage 42 arranged at the packaging port 41.

In Fig. 3, the conveying device 60 may include a horizontal conveying mechanism 61 and a vertical conveying mechanism 62. The horizontal conveying mechanism 61 is located below the packaging area 40 and configured to convey the packaged merchandise 92 falling off from the packaging port 41 to the vertical conveying mechanism 62.

In the above-described sorting process, the plurality of packaging ports may correspond to the merchandise orders of different users which may not be confused therebetween and may be less limited in number so that more users may be allowed to enter the retail facility for selecting merchandise and obtain the purchased merchandise duly, thereby greatly improving the shopping experience of the user.

Referring to Fig. 3, in order to make full use of the gravitational potential of the merchandise themselves to implementing transferring the merchandise, the merchandise display area 20, the conveying path 32, the packaging area 40 and the horizontal conveying mechanism 61 may be distributed sequentially from top to bottom in layers of different heights. The shipment area 70 may be arranged at a height the same as or similar to the merchandise display area 20 so as to facilitate providing by the user. The vertical conveying mechanism 62 may lift the packaged merchandise 92 conveyed by the horizontal conveying mechanism 61 located at the lowermost layer to the shipment area 70.

In addition, in order to facilitate the maintenance and improve an aesthetic effect of the retail facility, a transparent casing may be provided outside the merchandise display area 20, the conveying path 32, the packaging area 40 and the shipment area 70 for a maintenance person and a user to view the operation process of the merchandise within the retail facility.

With reference to the above-described embodiments of the retail facility, the present disclosure also provides some embodiments of a merchandise processing method based on the retail facility. As shown in Fig. 4, it is a schematic flowchart of some embodiments of the merchandise processing method of a retail facility according to the present disclosure. Referring to Fig. 4, in some embodiments, the merchandise processing method includes step 100 and step 300. In step 100, when a merchandise order associated with a scanning device is received, the sorting device 30 is controlled according to the merchandise order to sort the corresponding merchandise 91 within the merchandise display area 20 to position within the packaging area 40 corresponding to the scanning device.

For example, when a user scans the scan information of a merchandise by a scanning device, the controller of the retail facility or the remote control platform that manages the retail facility may receive a merchandise order associated with the scanning device. Here, the merchandise order associated with the scanning device may be a list of merchandise information associated with the designated identification corresponding to the scanning device, and may include merchandise category, quantity, discount information, and the like. The controller or the remote control platform may issue a control instruction to the sorting device 30 according to the merchandise order, so that the sorting device 30 sorts the corresponding merchandise 91 to position within the packaging area 40 corresponding to the scanning device. Here, the position corresponding to the scanning device may be at least one packaging port associated with the designated identification corresponding to the scanning device.

Referring to Fig. 2, according to the present invention, the merchandise display area 20 includes a plurality of merchandise shelves 21, each of which is configured to place at least one category of merchandise 91, and each of which is provided with scan information corresponding to categories of merchandise placed on the merchandise shelf 21. When the scanning device scans the scan information of the merchandise shelf 21, the controller or the remote control platform may receive the merchandise order sent by the scanning device or the merchandise shelf 21, and the merchandise order includes the associated information between the scanning device and the merchandise of a designated merchandise category and quantity.

In step 300, when a payment completion information is received, the packaging device 50 is controlled to package the merchandise 91 at corresponding positions within the packaging area 40, and the conveying device 60 is controlled to convey the packaged merchandise 92 to the shipment area 70.

For example, when the user is ready to check out after scanning multiple pieces of merchandises in the merchandise display area 20, the payment interface may be triggered by returning the scanning device. When the user completes a payment operation, the controller or remote control platform may receive a payment completion information provided by the charging device 83, and control the packaging device 50 to package the merchandises 91 that are already at corresponding positions within the packaging area 40, and then control the conveying device 60 to convey the packaged merchandise 92 to the shipment area 70. In this way, the user may obtain the packaged merchandise 92 from the shipment area 70.

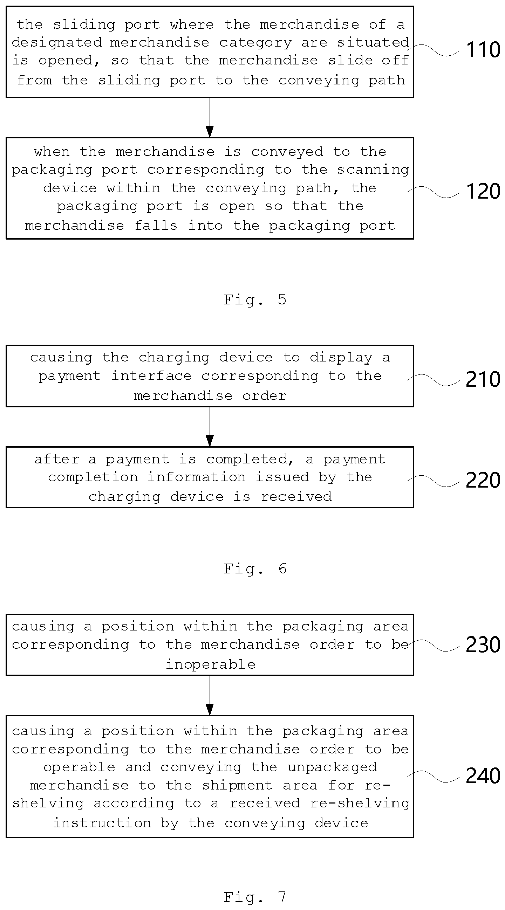

As shown in Fig. 5, it is a schematic diagram of a sorting process in some embodiments of the merchandise processing method of a retail facility according to the present disclosure. In Fig. 3, the packaging area 40 includes a plurality of packaging ports 41, and the sorting device 30 includes: a plurality of openable and closable sliding ports 31 respectively provided below the plurality of merchandise shelves 21 and a conveying path 32 communicating with the plurality of sliding ports 31 and the plurality of packaging ports 41.

The controller of the retail facility or the remote control platform that manages the retail facility may control the sorting device 30 to sort the merchandise 91 from the merchandise display area 20 to the corresponding packaging ports 41 in the packaging area. Specifically, the sorting operation may include step 110 and step 120. In step 110, the sliding port 31 where the merchandise 91 of a designated merchandise category are situated is opened, so that the merchandise 91 slide off from the sliding port 31 to the conveying path 32. In step 120, when the merchandise 91 is conveyed to the packaging port 41 corresponding to the scanning device within the conveying path 32, the packaging port 41 is open so that the merchandise 91 falls into the packaging port 41.

As shown in Fig. 6, it is a schematic diagram of a payment flow in some embodiments of the merchandise processing method of a retail facility according to the present disclosure. Referring to Fig. 2, the retail facility further includes a charging device 83. Thus, before the packaging operation, the merchandise processing method may further include step 210 and step 220. In step 210, the charging device 83 may display a payment interface corresponding to the merchandise order. In step 220, after a payment is completed, a payment completion information issued by the charging device 83 is received.

For example, when the user is ready for payment by some operations, for example returning the scanning device, the controller of the retail facility or the remote control platform that manages the retail facility may control the charging device 83 to display a payment interface corresponding to the merchandise order. The user may browse the payment interface to confirm the amount to be paid, the merchandise list on the merchandise order and discount description, and the like, and may perform payment by the payment methods provided in the payment interface. Upon a payment is completed, the charging device 83 may issue a payment completion information to the controller or the remote control platform, so as to trigger a subsequent packaging operation.

As shown in Fig. 7, it is a schematic diagram of a processing flow of unpaid merchandise orders in some embodiments of the merchandise processing method of a retail facility according to the present disclosure. Referring to Fig. 7, in some embodiments, when the user aborts purchase of the merchandise or fails to complete operations such as payment, the merchandise processing method further includes a method for processing an unpaid merchandise order. The method may include step 230, that is, causing a position within the packaging area 40 corresponding to the merchandise order to be inoperable. At this time, the merchandise is still located within a wrappage at a corresponding packaging port in the packaging area 40, and the merchandise order is cancelled or the user is prompted to change a payment method.

For the embodiments of the retail facility according to the present disclosure, the unpaid merchandise order may be further processed by a maintainer, for example, step 240, causing a position within the packaging area 40 corresponding to the merchandise order to be operable and conveying the unpackaged merchandise 91 to the shipment area 70 for re-shelving according to a received re-shelving instruction by the conveying device 60.

During this process, the maintainer may also trigger such processing process by the area 82 for returning the scanning device. For example, when a scanning device dedicated to abnormal processing is placed into the area 82 for returning the scanning device, the display screen of the retail facility shows the number of current unpaid orders. When re-shelving is necessary, the controller of the retail facility or the remote control platform that manages the retail facility may control the conveying device 60 to convey the unpackaged merchandise 91 to the shipment area 70. In this way, the maintainer may manually put away these merchandises, or these merchandises are automatically put away by a relevant mechanism of the retail facility.

Hereto, various embodiments of the present disclosure have been described in detail. Some details well known in the art are not described to avoid obscuring the concept of the present disclosure. According to the above description, those skilled in the art would fully know how to implement the technical solutions disclosed herein.

Although some specific embodiments of the present disclosure have been described in detail by way of examples, those skilled in the art should understand that the above examples are only for the purpose of illustration and are not intended to limit the scope of the present disclosure. The scope of the present disclosure is defined by the appended claims.

## Claims

1. A retail facility, comprising:
a building (10), comprising a merchandise display area (20) configured to place a merchandise (91), a packaging area (40) configured to package a merchandise (91), and a shipment area (70) configured to output a packaged merchandise (92);
a sorting device (30), configured to sort the merchandise (91) from the merchandise display area (20) to the packaging area (40);
a packaging device (50), configured to package the merchandise (91) entering the packaging area (40) ; and
a conveying device (60), configured to convey the packaged merchandise (92) from the packaging area (40) to the shipment area (70) ;
wherein the merchandise display area (20) comprises a plurality of merchandise shelves (21), each merchandise shelf (21) of which is configured to place at least one category of merchandises (91), and each merchandise shelf (21) of which is provided with scan information corresponding to categories of merchandises placed on the merchandise shelf (21);
wherein the packaging area (40) comprises a plurality of packaging ports (41), and the sorting device (30) comprises:
a plurality of sliding ports (31) respectively provided below the plurality of merchandise shelves (21), wherein each sliding port (31) is openable and closable; and
a conveying path (32) communicating with the plurality of sliding ports (31) and the plurality of packaging ports (41), and configured to convey the merchandise (91) sliding off from the sliding ports (31) to a corresponding packaging port (41);
and wherein the packaging device (50) comprises: a closing mechanism (51) configured to close a wrappage (42) provided at the packaging port (41); and the conveying path (32) comprises a slideway, below which the plurality of packaging ports (41) are located, and the sorting device (30) further comprises a flip provided at each packaging port (41), such that the flip is configured to allow the merchandise (91) to fall into the corresponding packaging port (41) from the slideway when the flip is opened.

2. The retail facility according to claim 1, wherein the building (10) further comprises:
an area (81) for providing a scanning device, configured to provide a scanning device with a designated identification, wherein the scanning device is configured to scan the scan information on the merchandise shelf (21) so as to form a merchandise order and associate the scan information with the designated identification;
and optionally, the scanning device comprises a scanner wearable on a human body or a hand-holdable scanner.

3. The retail facility according to claim 2, further comprising:
a charging device (83) configured to provide a payment interface and provide a payment completion information after a payment is completed;
the building (10) further comprises: an area (82) for returning a scanning device, configured to receive a returned scanning device and trigger the charging device (83) to display the payment interface of the merchandise order.

4. The retail facility according to claim 1, wherein the conveying device (60) comprises a horizontal conveying mechanism (61) and a vertical conveying mechanism (62), wherein the horizontal conveying mechanism (61) is located below the packaging area (40) to convey the packaged merchandise (92) falling off from the packaging port (41) to the vertical conveying mechanism (62), and the vertical conveying mechanism (62) is configured to lift the packaged merchandise (92) to the shipment area (70).

5. The retail facility according to claim 4, wherein the merchandise display area (20), the conveying path (32), the packaging area (40) and the horizontal conveying mechanism (61) are distributed sequentially from top to bottom in layers of different heights.

6. The retail facility according to claim 1, wherein a transparent casing is provided outside the merchandise display area (20), the conveying path (32), the packaging area (40) and the shipment area (70).

7. A merchandise processing method based on the retail facility according to any one of claims 1-6, comprising:
when a merchandise order associated with a scanning device is received, controlling the sorting device (30) according to the merchandise order to sort a corresponding merchandise (91) within the merchandise display area (20) to positions corresponding to the scanning device within the packaging area (40);
when a payment completion information is received, controlling the packaging device (50) to package the merchandise (91) at corresponding positions within the packaging area (40), and controlling the conveying device (60) to convey a packaged merchandise (92) to the shipment area (70).

8. The merchandise processing method according to claim 7, wherein the step of receiving a merchandise order comprises:
receiving a merchandise order sent by the scanning device or a merchandise shelf (21) when the scanning device scans the scan information of the merchandise shelf (21), wherein the merchandise order comprises associated information between the scanning device and the merchandise (91) of a designated merchandise category and quantity.

9. The merchandise processing method according to claim 8, wherein the step of sorting merchandise comprises:
opening a sliding port (31) where a merchandise (91) of a designated merchandise category is situated so that the merchandise (91) slides off from the sliding port (31) to the conveying path (32);
when the merchandise (91) is conveyed within the conveying path (32) to a packaging port (41) corresponding to the scanning device, opening the packaging port (41), so that the merchandise (91) falls into the packaging port (41).

10. The merchandise processing method according to claim 8 based on the retail facility according to claim 3, wherein the merchandise processing method further comprises the steps before a packaging step:
display a payment interface corresponding to the merchandise order by the charging device (83);
receiving a payment completion information issued by the charging device (83) after a payment is completed.

11. The merchandise processing method according to claim 10, further comprising a method for processing an unpaid merchandise order, which comprises:
causing a position within the packaging area (40) corresponding to the merchandise order to be inoperable.

12. The merchandise processing method according to claim 11, wherein the method for processing an unpaid merchandise order further comprises:
when a re-shelving instruction is received, causing the position within the packaging area (40) corresponding to the merchandise order to be operable and conveying an unpackaged merchandise (91) to the shipment area (70) for re-shelving by the conveying device (60).

## Patentansprüche

1. Einzelhandelseinrichtung, umfassend:
ein Gebäude (10), das einen Warenausstellungsbereich (20), der zum Platzieren einer Ware (91) ausgebildet ist, einen Verpackungsbereich (40), der zum Verpacken einer Ware (91) ausgebildet ist, und einen Versandbereich (70), der zur Ausgabe einer verpackten Ware (92) ausgebildet ist, umfasst;
eine Sortiervorrichtung (30), die dazu ausgebildet ist, die Ware (91) von dem Warenausstellungsbereich (20) zu dem Verpackungsbereich (40) zu sortieren;
eine Verpackungsvorrichtung (50), die zum Verpacken der in den Verpackungsbereich (40) eintretenden Ware (91) ausgebildet ist; und
eine Fördervorrichtung (60), die ausgebildet ist, um die verpackte Ware (92) von dem Verpackungsbereich (40) zu dem Versandbereich (70) zu fördern;
wobei der Warenausstellungsbereich (20) eine Mehrzahl von Warenregalen (21) umfasst, von denen jedes Warenregal (21) dazu ausgebildet ist, mindestens eine Kategorie von Waren (91) zu platzieren, und von denen jedes Warenregal (21) mit Scan-Informationen versehen ist, die den Kategorien von Waren entsprechen, die auf dem Warenregal (21) platziert sind;
wobei der Verpackungsbereich (40) eine Mehrzahl von Verpackungsöffnungen (41) umfasst, und die Sortiervorrichtung (30) umfasst:
eine Mehrzahl von Gleitöffnungen (31), die jeweils unterhalb der Mehrzahl von Warenregalen (21) vorgesehen sind, wobei jede Gleitöffnung (31) geöffnet und geschlossen werden kann; und
einen Förderweg (32), der mit der Mehrzahl von Gleitöffnungen (31) und der Mehrzahl von Verpackungsöffnungen (41) in Verbindung steht und ausgebildet ist, die von den Gleitöffnungen (31) abgleitende Ware (91) zu einer entsprechenden Verpackungsöffnung (41) zu befördern;
und wobei die Verpackungsvorrichtung (50) umfasst: einen Schließmechanismus (51), der zum Verschließen einer an der Verpackungsöffnung (41) vorgesehenen Verpackung (42) ausgebildet ist; und der Förderweg (32) eine Gleitbahn umfasst, unter der sich die Mehrzahl von Verpackungsöffnungen (41) befinden, und die Sortiervorrichtung (30) weiter eine an jeder Verpackungsöffnung (41) vorgesehene Klappe umfasst, so dass die Klappe so ausgebildet ist, zu ermöglichen, dass die Ware (91) von der Gleitbahn in die jeweilige Verpackungsöffnung (41) fällt, wenn die Klappe geöffnet ist.

2. Einzelhandelseinrichtung nach Anspruch 1, wobei das Gebäude (10) weiter umfasst:
einen Bereich (81) zum Bereitstellen einer Abtastvorrichtung, der so ausgebildet ist, dass er eine Abtastvorrichtung mit einer bestimmten Identifikation bereitstellt, wobei die Abtastvorrichtung ausgebildet ist, die Abtastinformationen auf dem Warenregal (21) abzutasten, um eine Warenbestellung zu bilden und die Abtastinformationen mit der bestimmten Identifikation zu verknüpfen;
und die Abtastvorrichtung optional einen am menschlichen Körper tragbaren Scanner oder einen in der Hand haltbaren Scanner umfasst.

3. Einzelhandelseinrichtung nach Anspruch 2 weiter umfassend:
eine Berechnungsvorrichtung (83), die ausgebildet ist, eine Zahlungsschnittstelle bereitzustellen und nach Abschluss einer Zahlung eine Zahlungsabschlussinformation zu liefern;
das Gebäude (10) weiter umfasst: einen Bereich (82) für die Rückgabe einer Scanvorrichtung, der ausgebildet ist, eine zurückgegebene Scanvorrichtung aufzunehmen und die Berechnungsvorrichtung (83) zu veranlassen, die Zahlungsschnittstelle der Warenbestellung anzuzeigen.

4. Einzelhandelseinrichtung nach Anspruch 1, wobei die Fördervorrichtung (60) einen horizontalen Fördermechanismus (61) und einen vertikalen Fördermechanismus (62) umfasst, wobei der horizontale Fördermechanismus (61) unterhalb des Verpackungsbereichs (40) angeordnet ist, um die verpackte Ware (92), die von der Verpackungsöffnung (41) herunterfällt, zu dem vertikalen Fördermechanismus (62) zu befördern, und der vertikale Fördermechanismus (62) ausgebildet ist, die verpackte Ware (92) zu dem Versandbereich (70) anzuheben.

5. Einzelhandelseinrichtung nach Anspruch 4, wobei der Warenausstellungsbereich (20), der Förderweg (32), der Verpackungsbereich (40) und der horizontale Fördermechanismus (61) nacheinander von oben nach unten in Schichten unterschiedlicher Höhe verteilt sind.

6. Einzelhandelseinrichtung nach Anspruch 1, wobei außerhalb des Warenausstellungsbereichs (20), des Förderwegs (32), des Verpackungsbereichs (40) und des Versandbereichs (70) ein transparentes Gehäuse vorgesehen ist.

7. Warenverarbeitungsverfahren basierend auf der Einzelhandelseinrichtung nach einem der Ansprüche 1-6, umfassend:
wenn eine der Abtastvorrichtung zugeordnete Warenbestellung empfangen wird, Steuern der Sortiervorrichtung (30) gemäß der Warenbestellung, um eine entsprechende Ware (91) innerhalb des Warenausstellungsbereichs (20) zu Positionen zu sortieren, die der Abtastvorrichtung innerhalb des Verpackungsbereichs (40) entsprechen;
wenn eine Zahlungsabschlussinformation empfangen wird, Steuern der Verpackungsvorrichtung (50), um die Ware (91) an entsprechenden Positionen innerhalb des Verpackungsbereichs (40) zu verpacken, und Steuern der Fördervorrichtung (60), um eine verpackte Ware (92) zum Versandbereich (70) zu fördern.

8. Warenverarbeitungsverfahren nach Anspruch 7, wobei der Schritt des Empfangens einer Warenbestellung umfasst:
Empfangen einer Warenbestellung, die von der Abtastvorrichtung oder einem Warenregal (21) gesendet wird, wenn die Abtastvorrichtung die Abtastinformationen des Warenregals (21) abtastet, wobei die Warenbestellung zugehörige Informationen zwischen der Abtastvorrichtung und der Ware (91) einer bestimmten Warenkategorie und Menge umfasst.

9. Warenverarbeitungsverfahren nach Anspruch 8, wobei der Schritt des Sortierens der Waren umfasst:
Öffnen einer Gleitöffnung (31), in der sich eine Ware (91) einer bestimmten Warenkategorie befindet, so dass die Ware (91) von der Gleitöffnung (31) auf den Förderweg (32) gleitet;
wenn die Ware (91) innerhalb des Förderweges (32) zu einer Verpackungsöffnung (41) befördert wird, die der Abtastvorrichtung entspricht, Öffnen der Verpackungsöffnung (41), so dass die Ware (91) in die Verpackungsöffnung (41) fällt.

10. Warenverarbeitungsverfahren nach Anspruch 8, basierend auf der Einzelhandelseinrichtung nach Anspruch 3, wobei das Warenverarbeitungsverfahren vor einem Verpackungsschritt weiter die Schritte umfasst:
Anzeigen einer der Warenbestellung entsprechenden Zahlungsschnittstelle durch die Berechnungsvorrichtung (83);
Empfangen einer Zahlungsabschlussinformation, die von der Berechnungsvorrichtung (83) ausgegeben wird, nachdem eine Zahlung abgeschlossen ist.

11. Warenverarbeitungsverfahren nach Anspruch 10, weiter umfassend ein Verfahren um Verarbeiten einer unbezahlten Warenbestellung, das umfasst:
Bewirken, dass eine Position innerhalb des Verpackungsbereichs (40), die der Warenbestellung entspricht, undurchführbar ist.

12. Warenverarbeitungsverfahren nach Anspruch 11, wobei das Verfahren zum Verarbeiten einer unbezahlten Warenbestellung weiter umfasst:
wenn eine Anweisung zur Wiedereinlagerung empfangen wird, die Position innerhalb des Verpackungsbereichs (40), die der Warenbestellung entspricht, betriebsbereit zu machen und eine unverpackte Ware (91) zum Versandbereich (70) zur Wiedereinlagerung durch die Fördervorrichtung (60) zu transportieren.

## Revendications

1. Un établissement de vente au détail, comprenant :
un bâtiment (10), comprenant une zone de présentation de marchandises (20) configurée pour placer une marchandise (91), une zone d'emballage (40) configurée pour emballer une marchandise (91), et une zone d'expédition (70) configurée pour délivrer une marchandise emballée (92) ;
un dispositif de tri (30), configuré pour trier la marchandise (91) de la zone de présentation de marchandises (20) à la zone d'emballage (40) ;
un dispositif d'emballage (50), configuré pour emballer la marchandise (91) entrant dans la zone d'emballage (40) ; et
un dispositif de transport (60), configuré pour transporter la marchandise emballée (92) de la zone d'emballage (40) à la zone d'expédition (70) ;
dans lequel la zone de présentation de marchandises (20) comprend une pluralité d'étagères de marchandises (21), dont chaque étagère de marchandises (21) est configurée pour placer au moins une catégorie de marchandises (91), et dont chaque étagère de marchandises (21) est pourvue d'informations de balayage correspondant à des catégories de marchandises placées sur l'étagère de marchandises (21) ;
dans lequel la zone d'emballage (40) comprend une pluralité d'orifices d'emballage (41), et le dispositif de tri (30) comprend :
une pluralité d'orifices coulissants (31) prévus sous la pluralité d'étagères de marchandises (21) respectivement, dans lequel chaque orifice coulissant (31) est apte à être ouvert et fermé ; et
un trajet de transport (32) communiquant avec la pluralité d'orifices coulissants (31) et la pluralité d'orifices d'emballage (41), et configuré pour transporter la marchandise (91) coulissant des orifices coulissants (31) à un orifice d'emballage correspondant (41) ;
et dans lequel le dispositif d'emballage (50) comprend : un mécanisme de fermeture (51) configuré pour fermer un emballage (42) fourni au niveau de l'orifice d'emballage (41) ; et le trajet de transport (32) comprend une glissière, sous laquelle sont situés la pluralité d'orifices d'emballage (41), et le dispositif de tri (30) comprend en outre une bascule prévue au niveau de chaque orifice d'emballage (41), de telle sorte que la bascule est configurée pour permettre à la marchandise (91) de tomber dans l'orifice d'emballage correspondant (41) à partir de la glissière lorsque la bascule est ouverte.

2. L'établissement de vente au détail selon la revendication 1, dans lequel le bâtiment (10) comprend en outre :
une zone (81) pour fournir un dispositif de balayage, configurée pour fournir à un dispositif de balayage une identification désignée, dans lequel le dispositif de balayage est configuré pour scanner les informations de balayage sur l'étagère de marchandises (21) de manière à former une commande de marchandise et associer les informations de balayage à l'identification désignée ;
et, facultativement, le dispositif de balayage comprend un scanner portable sur un corps humain ou un scanner tenable à la main.

3. L'établissement de vente au détail selon la revendication 2, comprenant en outre : un dispositif de facturation (83) configuré pour fournir une interface de paiement et fournir des informations d'achèvement de paiement après qu'un paiement est achevé ;
le bâtiment (10) comprend en outre : une zone (82) pour renvoyer un dispositif de balayage, configurée pour recevoir un dispositif de balayage renvoyé, et déclencher le dispositif de facturation (83) pour afficher l'interface de paiement de la commande de marchandise.

4. L'établissement de vente au détail selon la revendication 1, dans lequel le dispositif de transport (60) comprend un mécanisme de transport horizontal (61) et un mécanisme de transport vertical (62), dans lequel le mécanisme de transport horizontal (61) est situé sous la zone d'emballage (40) pour transporter la marchandise emballée (92) tombant de l'orifice d'emballage (41) au mécanisme de transport vertical (62), et le mécanisme de transport vertical (62) est configuré pour soulever la marchandise emballée (92) jusqu'à la zone d'expédition (70).

5. L'établissement de vente au détail selon la revendication 4, dans lequel la zone de présentation de marchandises (20), le chemin de transport (32), la zone d'emballage (40) et le mécanisme de transport horizontal (61) sont répartis séquentiellement de haut en bas en couches de hauteurs différentes.

6. L'établissement de vente au détail selon la revendication 1, dans lequel un boîtier transparent est fourni à l'extérieur de la zone de présentation de marchandises (20), du chemin de transport (32), de la zone d'emballage (40) et de la zone d'expédition (70).

7. Un procédé de traitement de marchandises basé sur l'établissement de vente au détail selon l'une quelconque des revendications 1 à 6, comprenant :
lorsqu'une commande de marchandise associée à un dispositif de balayage est reçue, commander le dispositif de tri (30) selon la commande de marchandise pour trier une marchandise correspondante (91) à l'intérieur de la zone de présentation de marchandises (20) à des positions correspondant au dispositif de balayage à l'intérieur de la zone d'emballage (40) ;
lorsqu'une information d'achèvement de paiement est reçue, commander le dispositif d'emballage (50) pour emballer la marchandise (91) à des positions correspondantes à l'intérieur de la zone d'emballage (40), et commander le dispositif de transport (60) pour transporter une marchandise emballée (92) à la zone d'expédition (70).

8. Le procédé de traitement de marchandises selon la revendication 7, dans lequel l'étape de réception d'une commande de marchandise comprend :
recevoir une commande de marchandise envoyée par le dispositif de balayage ou une étagère de marchandises (21) lorsque le dispositif de balayage scanne les informations de balayage de l'étagère de marchandises (21), dans lequel la commande de marchandise comprend des informations associées entre le dispositif de balayage et la marchandise (91) d'une catégorie et d'une quantité de marchandises désignées.

9. Le procédé de traitement de marchandises selon la revendication 8, dans lequel l'étape de tri de marchandises comprend :
ouvrir un orifice coulissant (31) où se trouve une marchandise (91) d'une catégorie de marchandises désignée de sorte que la marchandise (91) coule de l'orifice coulissant (31) au trajet de transport (32) ;
lorsque la marchandise (91) est transportée dans le trajet de transport (32) jusqu'à un orifice d'emballage (41) correspondant au dispositif de balayage, ouvrir l'orifice d'emballage (41), de sorte que la marchandise (91) tombe dans l'orifice d'emballage (41) .

10. Le procédé de traitement de marchandises selon la revendication 8 basé sur l'établissement de vente au détail selon la revendication 3, dans lequel le procédé de traitement de marchandises comprend en outre les étapes avant une étape d'emballage :
afficher une interface de paiement correspondant à la commande de marchandise par le dispositif de facturation (83) ;
recevoir une information d'achèvement de paiement émise par le dispositif de facturation (83) après qu'un paiement est achevé.

11. Le procédé de traitement de marchandises selon la revendication 10, comprenant en outre un procédé de traitement d'une commande de marchandise non payée, qui comprend :
amener une position à l'intérieur de la zone d'emballage (40) correspondant à la commande de marchandise à être inopérante.

12. Le procédé de traitement de marchandises selon la revendication 11, dans lequel le procédé de traitement d'une commande de marchandise non payée comprend en outre :
lorsqu'une instruction de ré-entreposage est reçue, amener la position à l'intérieur de la zone d'emballage (40) correspondant à la commande de marchandise à être opérationnelle et transporter une marchandise non emballée (91) à la zone d'expédition (70) pour un ré-entreposage par le dispositif de transport (60).
